Europäisches Patentamt

European Patent Office

Office européen des brevets

(19)

(11) Numéro de publication: **0 073 692**
**B1**

(12) **FASCICULE DE BREVET EUROPEEN**

(45) Date de publication du fascicule du brevet:
**11.09.85**

(51) Int. Cl.⁴: **E 05 F 11/42**

(21) Numéro de dépôt: **82401364.3**

(22) Date de dépôt: **22.07.82**

(54) **Dispositif d'entraînement par engrenage et son application à un lève-glace de véhicule automobile.**

(30) Priorité: **31.08.81 FR 8116555**

(43) Date de publication de la demande:
**09.03.83 Bulletin 83/10**

(45) Mention de la délivrance du brevet:
**11.09.85 Bulletin 85/37**

(84) Etats contractants désignés:
**DE GB IT SE**

(56) Documents cités:
**DE - C - 714 945**
**FR - A - 1 537 828**
**GB - A - 1 106 636**
**US - A - 2 334 835**

(73) Titulaire: **COMPAGNIE INDUSTRIELLE DE MECANISMES en abrégé C.I.M. Société dite:, 6, Rue Barbès, F-92302 Levallois-Perret (FR)**

(72) Inventeur: **Parizet, Roger, 66 Route des Bordes, F-45460 Bonnee (FR)**

(74) Mandataire: **Bressand, Georges et al, c/o CABINET LAVOIX 2 Place d'Estienne d'Orves, F-75441 Paris Cedex 09 (FR)**

## Description

La présente invention est relative à un dispositif d'entraînement par engrenage, du type comprenant un pignon moteur et un organe denté mené muni d'une butée de fin de course destinée à buter contre un élément d'arrêt, les dents du pignon et de l'organe denté entrant en prise sous un angle de pression positif par rapport à la tangente au cercle primitif du pignon. Un tel dispositif est connu par le FR-A-1 537 828.

L'invention s'applique notamment à l'actionnement des organes mobiles à commande manuelle des véhicules automobiles tels que les lève-glaces, les toits ouvrants ou les glissières de sièges.

Dans ces divers cas, il est fréquent que l'utilisateur exerce en fin de course un surcouple important sur le pignon moteur, ce surcouple pouvant être de l'ordre de dix fois le couple moteur normal

Or, dans les agencements connus, la face active de la butée est perpendiculaire à la courbe primitive de la denture de l'organe mené, de sorte que l'élément d'arrêt exerce sur cette butée un effort parallèle à la tangente à cette courbe primitive au point d'engrènement, alors que l'effort d'engrènement est incliné sur cette tangente dans le sens qui s'éloigne du pignon. Ainsi, le FR-A-1 537 828 décrit un dispositif de commande de lève-glace comportant un bras formant un secteur denté et un levier, et une patte servant de butée de fin de course est ménagée sur le bord radial du secteur.

Par conséquent, en cas de surcouple en fin de course, l'effort exercé par le pignon sur l'organe denté présente une composante radiale non compensée qui tend à repousser cet organe et, par suite, risque de le déformer et de le détériorer.

L'invention a pour but de fournir un agencement qui supprime ce risque et permet par suite d'utiliser une construction moins rigide, plus économique et plus légère de l'organe denté.

A cet effet, l'invention a pour objet un dispositif d'entraînement du type précité, caractérisé en ce qu'il comprend des moyens pour presser l'organe denté et le pignon l'un contre l'autre lorsque la butée coopère avec l'élément d'arrêt, en ce que lesdits moyens sont adaptés pour presser l'un contre l'autre l'organe denté et le pignon avec une force proportionnelle à l'effort exercé par la butée sur l'élément d'arrêt, et lorsqu'elle coopère avec l'élément d'arrêt, la face active de la butée est inclinée, par rapport à la direction perpendiculaire à ladite tangente, dans le même sens que les flancs des dents en prise motrice.

Des modes de réalisation additionnels sont caractérisés dans les revendications 2—4.

L'invention a également pour objet un lève-glace à secteur denté, notamment pour véhicule automobile, caractérisé en ce qu'il comprend un dispositif d'entraînement tel que défini ci-dessus, le secteur denté constituant ledit organe denté.

L'invention est exposée ci-après plus en détail à l'aide du dessin annexé, qui en représente seulement un mode d'exécution. Sur ce dessin:

la Fig. 1 est une vue schématique d'un dispositif d'entraînement conforme à l'invention;

la Fig. 2 est une vue partielle prise en coupe suivant la ligne 2-2 de la Fig. 1.

Le dispositif d'entraînement illustré au dessin est appliqué à l'actionnement d'un lève-glace de véhicule automobile dans lequel le bas de glace (non représenté) est déplacé au moyen d'un bras 1 dont une extrémité 2 est fixée, par exemple soudée par points, à une extrémité 3 d'un secteur denté 4. Ce dernier a la forme d'un secteur de couronne d'épaisseur radiale relativement faible et dont la périphérie extérieure est dentée.

L'autre extrémité 5 du secteur 4 est pourvue d'une butée de fin de course 6 en saillie qui coopère par une face active 7 avec un ergot d'arrêt fixe 8 de forme cylindrique, et le bras 1 oscille en un point intermédiaire autour d'un axe fixe 9.

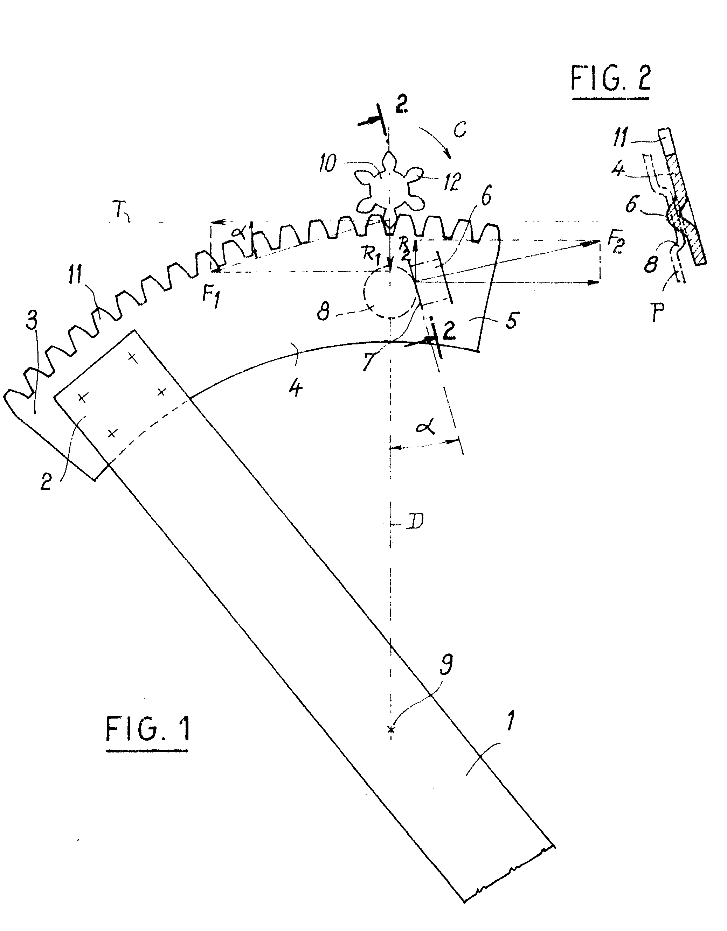

Le secteur denté 4 est entraîné par un pignon moteur 10 dont l'axe définit avec l'axe 9 unte droite D, ces deux axes étant perpendiculaires au plan du bras 1 et du secteur 4 et étant portés par une platine fixe P (Fig. 2). Cette platine P porte également, en regard du secteur 4, l'ergot cylindrique 8, dont la surface latérale active est voisine de la droite D.

Les parties actives extérieures des dents 11 du secteur 4 et 12 du pignon 10 ont des flancs convergents, de sorte que l'effort d'engrènement moteur $F_1$, qui est perpendiculaire aux flancs en prise motrice des dents 11 et 12 considérées, n'est pas parallèle à la tangente T à la courbe primitive des dents 11 ou 12 au point d'engrènement mais est incliné par rapport à cette tangente d'un angle $\alpha$, dit angle de pression, dans le sens qui s'éloigne du pignon 10.

Par conséquent, l'effort d'engrènement $F_1$ possède une composante radiale $R_1$ dirigée vers l'axe 9 du bras 1 et proportionnelle à l'effort $F_1$.

La butée 6 est obtenue par découpage sur deux grands côtés et emboutissage d'une languette rectangulaire du secteur 4. Ces deux côtés, dont l'un définit la face active 7, sont perpendiculaires à l'effort $F_1$ lorsque cette face 7 bute contre l'ergot 8. Ainsi, l'effort de butée $F_2$ exercé par l'ergot 8 sur la butée 6 est parallèle et pratiquement opposé en amplitude à l'effort moteur $F_1$, et il possède une composante radiale $R_2$ qui est presque directement opposée à la composante $R_1$.

De cette façon, quel que soit le couple moteur C exercé sur le pignon 10 en fin de course, la composante $R_1$ est toujours sensiblement équilibrée par la composante de butée $R_2$, et l'extrémité 5 du secteur 4 n'a aucune tendance à être repoussée vers l'axe 9 par le pignon. Le secteur denté ne subit donc aucune déformation ni détérioration, notamment à l'emplacement de sa fixation sur le bras 1.

Si l'extrémité opposée 3 du secteur 4 est éga-

lement pourvue d'une butée, on peut agencer celleci de façon analogue, c'est-à-dire avec une inclinaison de sa face active sur la droite D, en position de fin de course, opposée à celle de la face 7 de la butée 6, c'est-à-dire à l'angle de pression $\alpha$. Cependant, on comprend que la rigidité radiale bien supérieure de l'extrémité 3 du secteur denté rend moins nécessaire une telle inclinaison.

De façon plus générale, toute inclinaison dans le sens adéquat de la butée 6 développe une réaction radiale telle que $R_2$. Celle-ci équilibre $R_1$ lorsque l'inclinaison est sensiblement égale à l'angle $\alpha$, mais on peut, dans certains cas, choisir une valeur différente notamment supérieure.

Bien entendu, en variante, la face 7 peut ne pas être plane, et/ou l'ergot 8 peut avoir une forme autre que cylindrique. Dans tous les cas, c'est le plan tangent commun au point de contact face 7 — ergot 8 qui possède l'inclinaison définie ci-dessus.

## Revendications

1. Dispositif d'entraînement par engrenage, du type comprenant un pignon moteur (10) et un organe denté mené (4) muni d'une butée de fin de course (6) destinée à buter contre un élément d'arrêt (8), les dents (11, 12) du pignon et de l'organe denté entrant en prise sous un angle de pression positif ($\alpha$) par rapport à la tangente (T) au cercle primitif du pignon, caractérisé en ce qu'il comprend des moyens pour presser l'organe denté (4) et le pignon (10) l'un contre l'autre lorsque la butée (6) coopère avec l'élément d'arrêt (8), en ce que lesdits moyens sont adaptés pour presser l'un contre l'autre l'organe denté (4) et le pignon (10) avec une force ($R_2$) proportionnelle à l'effort ($F_2$) exercé par la butée (6) sur l'élément d'arrêt (8), et lorsqu'elle coopère avec l'élément d'arrêt (8), la face active (7) de la butée (6) est inclinée, par rapport à la direction (D) perpendiculaire à ladite tangente (T), dans le même sens que les flancs des dents (11, 12) en prise motrice.

2. Dispositif suivant la revendication 1, caractérisé en ce que l'inclinaison ($\alpha$) de la face active (7) de la butée (6) par rapport à ladite direction radiale (D) est au moins égale à l'inclinaison desdits flancs par rapport à cette même direction.

3. Dispositif suivant la revendication 2, caractérisé en ce que la face active (7) de la butée (6) est perpendiculaire à la direction de l'effort ($F_1$) d'engrènement.

4. Dispositif suivant l'une quelconque des revendications 1 à 3, caractérisé en ce que la face active (7) de la butée (6) est plane et coopère avec une surface cylindrique de l'élément d'arrêt (8).

5. Lève-glace à secteur denté, notamment pour véhicule automobile, caractérisé en ce qu'il comprend un dispositif d'entraînement suivant l'une quelconque des revendications 1 à 4, le secteur denté (4) constituant ledit organe denté.

## Patentansprüche

1. Vorrichtung zur Mitnahme durch Zahneingriff, mit einem Antriebsritzel (10) und einem verzahnten Abtriebselement (4) mit einem Anschlag zur Begrenzung der Bewegung, welcher sich an ein Anhalteelement (8) anlegt, wobei die Zähne (11, 12) des Ritzels und des verzahnten Elements unter einem positiven Druckwinkel ($\alpha$) in bezug auf die Tangente (T) am Teilkreis des Ritzels ineinandergreifen, dadurch gekennzeichnet, daß die Vorrichtung Mittel zum Aneinanderdrücken des verzahnten Elements (4) und des Ritzels (10) aufweist, wenn der Anschlag (6) mit dem Anhalteelement (8) zusammenwirkt, indem diese Mittel das verzahnte Element (4) und das Ritzel (10) mit einer Kraft ($R_2$) aneinanderdrücken, die proportional der Kraft ($F_2$) ist, welche der Anschlag (6) auf das Anhalteelement (8) ausübt, und daß, wenn dieser mit dem Anhalteelement (8) zusammenwirkt, die aktive Fläche (7) des Anschlags (6) gegenüber der Richtung (D) senkrecht zu der Tangente (T) in derselben Richtung geneigt ist wie die Flanken der im Eingriff stehenden Antriebszähne (11, 12).

2. Vorrichtung nach Anspruch 1, dadurch gekennzeichnet, daß die Neigung ($\alpha$) der aktiven Fläche (7) des Anschlags (6) gegenüber der radialen Richtung (D) mindestens gleich der Neigung der Flanken in bezug auf dieselbe Richtung ist.

3. Vorrichtung nach Anspruch 2, dadurch gekennzeichnet, daß die aktive Fläche (7) des Anschlags (6) senkrecht zur Eingriffskraftrichtung ($F_1$) steht.

4. Vorrichtung nach einem der Ansprüche 1 bis 3, dadurch gekennzeichnet, daß die aktive Fläche (7) des Anschlags (6) plan ist und mit einer zylindrischen Oberfläche des Anhalteelements (8) zusammenwirkt.

5. Fensterkurbel mit Verzahnungsabschnitt, insbesondere für ein Kraftfahrzeug, dadurch gekennzeichnet, daß diese eine Mitnahmeeinrichtung nach einem der Ansprüche 1 bis 4 aufweist, wobei der Verzahnungsabschnitt (4) das genannte verzahnte Element ist.

## Claims

1. A driving device employing gears, of the type comprising a driving pinion (10) and a driven toothed element (4) provided with an end-of-travel abutment (6) adapted to abut against a stop element (8), the teeth (11, 12) of the pinion and toothed element coming into engagement at a positive angle of pressure ($\alpha$) relative to the tangent (T) to the pitch circle of the pinion, characterised in that it comprises means for urging the toothed element (4) and the pinion (10) against each other when the abutment (6) cooperates with the stop element (8), said means being adapted to urge the toothed element and the pinion (10) against each other with a force ($R_2$) which is proportional to the force ($F_2$) exerted by

the abutment (6) on the stop element (8), and, when it cooperates with the stop element (8), the active surface (7) of the abutment (6) is inclined relative to the direction (D) perpendicular to said tangent (T) in the same direction as the sides of the teeth (11, 12) in driving engagement.

2. A device according to claim 1, characterized in that the inclination ($\alpha$) of the active surface (7) of the abutment (6) relative to said radial direction (D) is at least equal to the inclination of said sides relative to this same direction.

3. A device according to claim 2, characterized in that the active surface (7) of the abutment (6) is perpendicular to the direction of the gearing force ($F_1$).

4. A device according to any one of the claims 1 to 3, characterized in that the active surface (7) of the abutment (6) is planar and cooperates with a cylindrical surface of the stop element (8).

5. A window winder employing a toothed sector, in particular for a motor vehicle, characterised in that it comprises a driving device according to any one of the claims 1 to 4, the toothed sector (4) constituting said toothed element.

FIG. 2

FIG. 1